# EUROPEAN PATENT SPECIFICATION

(11) **EP 0 581 360 B1**
(45) Date of publication and mention of the grant of the patent: **23.10.1996**
(21) Application number: 93202065.4
(22) Date of filing: 13.07.1993
(51) Int. Cl.: C08F 255/02

(54) **Process for functionalizing ethylene polymers**
Verfahren zur Herstellung von Ethylenpolymeren mit funktionellen Gruppen
Procédé pour la préparation de polymères d'éthylène avec des groupes fonctionnels

(30) Priority: 31.07.1992 IT MI921894
(43) Date of publication of application: 02.02.1994
(73) Proprietor: Polimeri Europa S.r.l., 90139 Palermo (IT)
(72) Inventor: Princiotta, Gualtiero, I-98061 Brolo, Messina (IT); Delfino, Sebastiano, I-20133 Milano (IT)
(74) Representative: Appoloni, Romano

(56) References cited:
- EP-A- 0 210 307
- EP-A- 0 268 985
- EP-A- 0 300 718
- EP-A- 0 370 735

## Description

The present invention relates to a process for functionalizing ethylene (co)polymers by grafting them with maleic anhydride (AM), in the presence of radical initiators of peroxy type.

It is known that in a large number of applications, polyolefins, owing to their substantially apolar character, display an insufficient compatibility with various polar, either polymeric or non-polymeric, substrates.

Introducing polar functional groups, such as carboxy acids and/or their derivatives (anhydrides, esters) into the polyolefinic backbone improves the compatibility characteristics and the possibility of interacting and forming adhesion bonds with such polar substrates, in particular with those containing such functional moieties as -R-NH₂ such as polyamides or -R-OH, such as ethylene, vinyl alcohol copolymers, and with metal surfaces.

The introduction of acidic or anhydride functional moieties improves the characteristics of adhesion and compatibility with the above said polar substrates, also by starting from ethylene-unsaturated esters copolymers, such as ethylene-vinyl acetate (EVA), which already display a certain polarity already from the beginning.

Functionalized polymers having these characteristics are used, among other applications, as binding agents in the field of multilayer composite materials, which can be manufactured by means of co-extrusion techniques, such as film co-extrusion and blow-molding processes.

In fact, as known, by using functionalized polymers as an intermediate adhesive and compatibilizer layer, multilayer structures can be obtained from poorly compatible polymers, such as, e.g., polyolefin/nylon or polyolefin/ethylene-vinyl alcohol copolymers, which are very largely used in the sector of alimentary packing. In such structures, as known, the characteristics of lack of toxicity, weldability and impermeability typical of polyolefins are associated with the oxygen and carbon dioxide barrier characteristics typical of polyamides, ethylene-vinyl alcohol copolymers and so forth, thus enabling the alimentary product to be kept unaltered for longer time periods.

Ethylene (co)polymers containing acidic and/or anhydride functional groups can be obtained by means of the grafting technique, which consists in grafting unsaturated monomers onto the polymeric chains by means of radical initiators.

The grafting technique can be carried out in bulk and continuously, by means of a single-screw or twin-screw extruder, thanks to its high mixing power and use flexibility.

Serious drawbacks to be faced when one tries to functionalize ethylene polymers by means of the extrusion grafting technique, are constituted by phenomena of degradation and thermomechanical crosslinking of the polymeric chains (mechano-chemical reactions) due to the high shear stresses the polymer is submitted to (Comprehensive Polymer Science, 6, page 621).

Such drawbacks are obviously more serious above all in the case when polymers not containing radical inhibitors are processed.

The use of polymers containing more or less large amounts of radical inhibitors, sharply reduces such alterations. However, the presence of such stabilizer agents requires, with the grafting degree and other conditions being the same, using larger amounts of radical initiators and therefore causes larger amounts of byproducts (deriving from the decomposition of the initiator and from the reactions undergone by the stabilizer agent) to appear in the product, which are difficult to be removed, are noxious and, sometimes, bad smelling.

Rather recently, many processes were proposed aiming at overcoming the drawbacks which affect the prior art, as briefly mentioned above; among them, the process disclosed in U.S. 4,762,890 relates to a free-radical grafting process of polyethylenes with maleic anhydride (AM), performed inside a twin-screw extruder and feeding solutions of maleic anhydride and peroxide in a polar solvent, onto the polymer in an already molten state.

Unfortunately, the use of polar solvent, necessary in order to have a good solubility for maleic anhydride, implies, as its main drawback, the unavoidable presence of water in the polar solvents used; now, the presence of water may cause the hydration and consequently the opening of the anhydride ring, with the corresponding dicarboxy acid being formed. Furthermore, any used solvent must be completely removed from the functionalized polymer, in order to prevent that bad smells arise, which can endanger the use in alimentary packing sector.

In U.S. 3,177,269 it is stated that, in order to limit the polymer degradation, the peroxide and the monomer to be grafted should be added to the molten polymer, with the blend being malaxated inside an extruder.

In U.S. 4,639,495, the degradation of the polymer is reduced by using a special screw configuration. The resulting grafted polymer is suitable for being mixed with polyamides, but the Applicant does not specify whether the resulting polymer can be filmed, on the common machines used for that purpose, yielding perfectly transparent films with a low number of defects (fish eyes).

In U.S. patent No. 4,612,155, for the recited purpose of mimimizing the degradation phenomena, the polymer to be grafted is fed in mixture with a minor portion of a second polymer, with the latter being characterized in that it displays a very low viscosity, lower than 50% of main polymer viscosity; in that way, the mechanochemical reactions due to the high shear stresses to which the polymer is submitted in the first melting zone, and the crosslinking are reduced to a minimum, with, as is textually declared in the disclosure, the grafted polymer being made commercially acceptable.

The present Applicant has surprisingly found now a novel process of functionalization of thermoplastic ethylene polymers by means of the radical initiated grafting, in bulk and continuously, of unsaturated monomers and, above all, maleic anhydride, onto the polymeric chains, which makes it possible a sharp decrease to be achieved in the normal degradation and crosslinking reactions, by using, as the reactor, usual twin-screw extruders with co-revolving screws, and using polymers free from stabilizer agents; the latter fact makes it possible, as mentioned above, a limited amount of peroxide to be used, with the other conditions being the same, and consequently purer functionalized polymers to be obtained.

Such a process essentially consists in feeding, under a blanketing nitrogen atmosphere, continuously and in a twin-screw extruder, not more than 95% by weight of polymer to be grafted, free from stabilizers and as pellets, with the residual polymer being fed as a powder containing all of the unsaturated monomer together with the radical initiator, and causing the whole reaction mass to flow through the first extruder section equipped with conveying type screw elements, during a long enough time in order to enable the aliquot of polymer powder to be at least partially melted, and it to be simultaneously homogenized with the polymer pellets. The twin-screw extruder operates with a variable temperature gradient along its longitudinal axis and starting from a temperature value which is at least equal to, or slightly higher than, the melting temperature of the polymer to be grafted, up to reach values close to 250°C.

By operating according to the grafting method of the present invention, not very much degraded polymers are obtained which are endowed with an extremely good adhesive power for polymeric substrates, as well as metal substrates, and which suppply films endowed very good optical characteristics and with a lower level of defects, which render it suitable for the above cited uses.

On the basis of the above, the present invention relates to a continuous process for functionalizing ethylene (co)polymers by grafting, in an extruder, said ethylene (co)polymers with maleic anhydride and in the presence of a radical initiator of peroxy type, which essentially comprises the following steps:
(a) feeding under a blanket nitrogen atmosphere and continuously, the polymer to be grafted, maleic anhydride and the radical initiator, to the initial section of a twin-screw extruder, in which initial section of said extruder temperature is kept at a value which is 5°C-20°C higher than the polymer melting temperature, the first extruder section, equipped with conveying type screw elements, having a length comprised within the range of from 35% to 65% of total extruder length,
(b) continuously feeding, to a point which is at about three fourths of total extruder length, an hexanic solution of from 5 to 10% by weight of an antioxidant and in such an amount as to obtain an end polymer containing 150-200 parts per million parts (ppm) of antioxidant,
(c) removing hexane somewhere upstream from the extruder end,
(d) causing the grafted polymer in the molten state to flow through a die installed at the extruder end,
with such a process being characterized in that:
i) the polymer to be grafted is free from stabilizers and it is free from antioxidant
ii) an aliquot of the polymer to be grafted, not higher than 95% by weight of total polymer is fed as pellets, with the residual portion comprised in the range of from 5 to 50% b.w. being fed as a powder containing,intimately mixed with it, the whole amount of maleic anhydride and the radical initiator,
iii) the whole reactive mass flows through the first section of the extruder equipped with conveying type screw elements, during a long enough time in order to enable the aliquot of polymer in powder form to be at least partially melted and it to be simultaneously homogenized with the polymer pellets.

A typical feature of the process for functionalizing ethylene polymers according to the present invention is that a portion of total polymer fed, which may be comprised within the range of from 5 to 50% by weight, but which, owing to obvious reasons of costs connected with polymer grinding, is preferably comprised within the range of from 5 to 15% of polymer to be functionalized, is fed as a powder containing both maleic anhydride and the radical initiator. In fact, it was surprisingly discovered that by means of such a contrivance both the polymer degradation and crosslinking reactions are reduced which, as said above, also depend on the thermomechanical forces implied in the process.

The process is furthermore characterized in that the polymer to be grafted is free from antioxidants; this is a great advantage thereof, because it makes it possible the grafting reaction to be carried out with reduced amounts of radical initiator as compared to the same reaction when carried out on polymers which, on the contrary, contain antioxidants.

A further characterizing feature of the present invention is that the whole reaction mass must flow through the first extruder section, equipped with conveying type screw elements, during a long enough time to enable the partial melting of the aliquot of polymer which was fed in powder form and its homogenizing with the polymer aliquot which was fed as pellets.

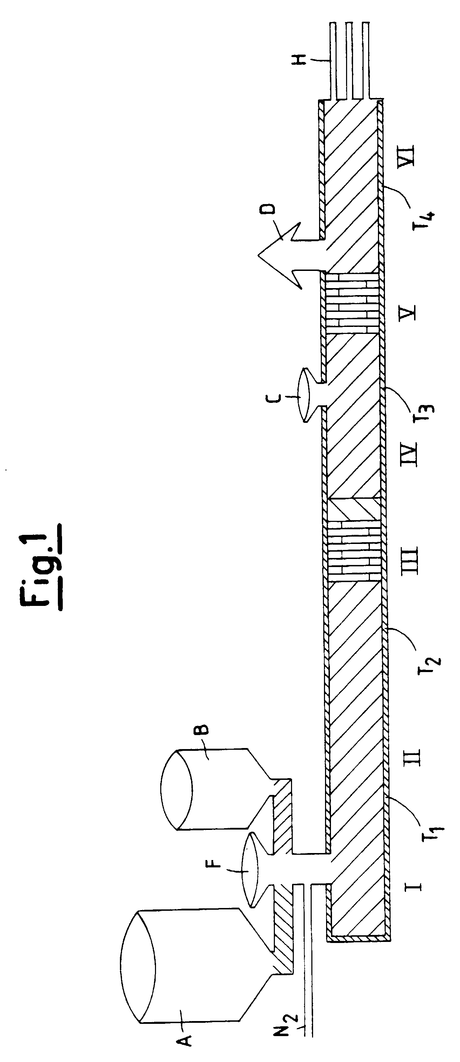

The disclosure of the operative mode in order to functionalize ethylene (co)polymers according to the present invention is made by referring to Figure 1, which displays the schematic of the process of grafting of said polymer inside an extruder.

Referring to said Figure, an ethylene (co)polymer free from stabilizer agents, is fed as pellets to the larger hopper (A) of the two hoppers the extruder is provided with, and the reactants, e.g., maleic anhydride and the radical initiator, are fed, on the contrary, intimately mixed with a minor portion, as compared to the polymer portion fed in pellet form, of polymer powder, by means of hopper (B). Maleic anhydride, which is commercialy available on the market in flake form, is preliminarily ground.

The feed to the extruder is carried out under a nitrogen blanketing atmosphere, which is fed to the duct which delivers the polymers to the first extruder zone (feed zone; I of Figure 1) of the extruder, and is vented through the top of said duct, flowing through the filter (F); such a filter is used in order to remove from the stream any possible reactant amounts entrained by the nitrogen stream.

After the first zone, i.e., the feed zone, the first section of the extruder follows (zone II of Figure 1), which has already been mentioned hereinabove; in such a zone, the extruder is equipped with conveying type screw elements. The length of said zone is, as already said, such that the polymer is conveyed through it during a long enough time in order to enable the aliquot of polymer fed in powder form to be at least partially melted and it to be simultaneously homogenized with polymer granules; such a time is accomplished by increasing the length of the first section of the same extruder (zone II of Figure 1), up to values comprised within the range of from 35% to 60% of total extruder length; such a value preferably is comprised within the range of from 40% to 50%. At the end of such a zone, the reaction mass has the appearance of a kind of molasses in which polymer granules are uniformly dispersed. Immediately downstream from the first extrusion section equipped with conveying type screw elements, and therefore, owing to the above said reasons, at a distance from the polymer feed point corresponding to 35% - 60% of total extruder length, there is a zone (zone III of Figure 1) in which the extruder is equipped with kneading type screw elements and the temperature is comprised within the range of from 200°C to 250°C, preferably of from 220°C to 230°C, inside which the polymer is completely melted and homogenized. In the case when as the free-radical initiator dicumyl peroxide is used, this has, at these temperatures, a half-life time of a few seconds.

At the end of the zone III and adjacent to it, there is a reverse pitch screw element, which is used in order to supply a so said "banking hydraulic jump effect".

At the end of the malaxating or kneading zone (zone III of Figure 1), immediately downstream from the reverse pitch screw element, there is another conveying type zone with direct pitch conveying screw elements (zone IV of Figure 1), (the screw elements are changed once more), in which into the extruder (point "C" of Figure 1) an hexanic solution of antioxidant is injected in order to stabilize the polymer. After a sufficient mixing of the antioxidant (zone V of Figure 1), the solvent and any other volatiles are removed from a venting point (point "D" of Figure 1) with which a vacuum pump is connected. The grafted polymer leaves the die (H), placed at extruder end, as noodles which are subsequently pelletized by means of a shearing unit. The temperature values in the end extruder zones (i.e., the zones IV, V and VI, respectively, of Figure 1), are kept inside the range of from 210 to 180°C.

From the above, one will understand that, in order to practice the present grafting process, the first malaxating zone of the extruder (zone III of Figure 1, in which the first kneading elements are provided) should not be installed too close to the main feed.

Should such a first kneading zone (also said "malaxating zone") be installed very close to the polymer feed and, simultaneously, all the polymer to be grafted be fed as pellets, a higher degradation of grafted polymer would be observed; this would imply an increase in the number of defects (fish eyes) with the other conditions being the same, being present in multilayer films obtained by starting from such a functionalized polymer.

Such a considerable and interesting effect can be explained on considering that, since the polymer powder has a higher specific surface area than the pellets, it can absorbe a larger amount of heat from the metal extruder surfaces; consequently, in the first malaxating zone (zone III of Figure 1), a very critical one as regards shear stress, the reactants will be at a higher temperature and hence under higher fluidity conditions.

As a consequence, the polymer can be melted and well mixed during a short time period without being submitted to a higher shear stress which, by causing mechanochemical and thermal reactions, is one of the responsible factors of the undesired effects which are then observed on polymer films.

By means of the process according to the present patent application, as said hereinabove, the polymer to be grafted can also be fed free from radical inhibitors which, by acting as deactivator agents in the large number of radical reactions which take place in the reaction system, may cause a delay in the kinetics of the grafting polymer and, with the reaction time being the same, a consequent decrease in grafting yield, as well as, in some cases, considerable and undesired phenomena of discolouration.

Furthermore, by starting from polymers free from radical inhibitor agents, extremely small amounts of radical initiators can be used, with other conditions being the same; therefore, the grafted polymer will contain a smaller amount of byproducts which often are noxiuos and bad smelling.

With this novel process, the stabilization can be carried out, on the contrary, after the radical reaction of monomer grafting onto the polymers, i.e., along the extruder, in the nearby of the outlet from it, where the desired conversion degree has already been obtained (Figure 1, point "C").

Among ethylene polymers which can be submitted to the functionalization reaction by grafting with maleic anhydride and/or other unsaturated monomers, according to the criteria of the present invention, we'll mention here the homopolymers, such as high density polyethylene (HDPE), and/or copolymers thereof such as linear low density polyethylene (LLDPE) and, more generally, ethylene copolymers with alpha-olefins and ethylene copolymers with vinyl acetate (EVA).

The amount of maleic anhydride (AM), used in the reaction of functionalization of ethylene polymers are such that at the end of the functionalization reaction, i.e., at extruder outlet, a grafted ethylene polymer is obtained which contains from 0.05 to 0.20% by weight of AM; such levels, which are enough in order to ensure good compatibilizing and adhesion properties, are obtained by feeding from 0.07 to 0.30% by weight of maleic anhydride, based on total polymer.

As regards the amounts of radical initiators to be fed together with the polymer powder and unsaturated monomer, they are comprised within the range of from 0.003 to 0.008% by weight, based on total ethylene polymer weight (i.e., polymer powder plus polymer pellets) fed to the extruder.

The polymer in pellet form and the polymer in powder form containing the other two reactants (i.e., maleic anhydride and the free-radical initiator, respectively) are fed to the extruder from their respective feeding hoppers (A) and (B) of Figure 1, in the preselected ratios, i.e., from 50:50 to 95:5 parts of polymer in pellet form:parts of polymer in powder form; preferably, such a value is comprised within the range of from 95:5 to 85:15.

As radical initiators of the grafting reaction, very suitable are the initiators of peroxy type (organic peroxides) and, among them, dicumyl peroxide (DCP).

Maleic anhydride powder and the initiator powder are mixed with the polymer powder inside common impeller mixers and following the procedure known from the prior art.

The polymer pellets are generally constituted by small cylindrical bodies obtained by shearing, by means of a shearing unit, polymer noodles obtained, in their turn, by die extrusion; the diameter of said cylindrical bodies is comprised within the range of from 2 to 3 mm and preferably is of 2 mm. The polymer powder is constituted, on the contrary, by particles having an average size, corresponding to the actual size of 90% of same polymer, comprised within the range of from 150 to 500 µm.

The general aspects of the instant invention having been so disclosed, the following specific Examples are supplied for the only purpose of illustrating some details thereof, and should not be construed as being limitative of the purposes of the same invention.

The polymers used in these Examples have been manufactured by the Company Enichem Polimeri without any addition of antioxidants, in conformity with the purposes of the present invention.

Maleic anhydride, acetone and hexane used are FLUKA products; dicumyl peroxide (DCP), is manufactured by AKZO and was used as supplied; the antioxidant used is ANOX PP 18 [octadecyl-3-(3',5'-di-t-butyl-4'-hydroxyphenyl-propionate )], a product manufactured by the Company Enichem Synthesis.

### EXAMPLE 1

### (Comparison Example)

In the following the test is disclosed of functionalization of a high density polyethylene, all of which was fed to the extruder as pellets (see hereinunder).

Said polyethylene is a high density polyethylene (HDPE) which is marketed by the Company Enichem Polimeri under the trade name Eraclene MM 95, which, however, as said above, was manufactured free from antioxidant; its chemical-physical characteristics are reported in following Table 1, together with those of the other polymers used in the experiments of the subsequent Examples.

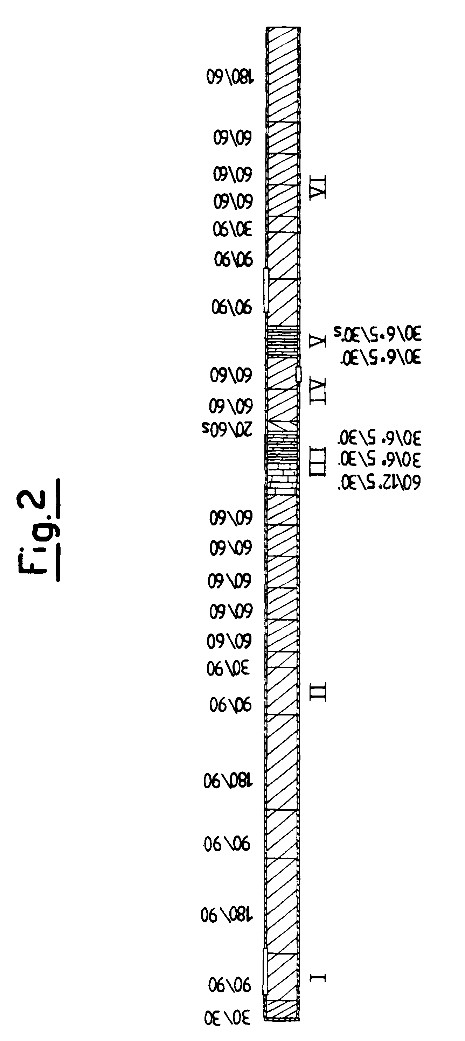

The functionalizing agent, constituted by maleic anhydride, and the radical initiator, constituted by dicumyl peroxide, were uniformely dispersed with polyethylene, by coating the pellets of the latter, by means of the following methodology.
(a) COATING THE POLYMER PELLETS TO BE FUNCTIONALIZED WITH A LAYER OF FUNCTIONALIZING MONOMER.
   To a vessel of 15 litres of capacity, 0.5 l of acetone, 14 g of maleic anhydride (AM) and 0.35 g of dicumyl peroxide (DCP) are charged; the resulting mixture is mixed on a tumbling mixer until the reactants are completely dissolved; then mixing is discontinued and 7 kg of polymer pellets (HDPE) is added. Mixing is restarted until the reaction blend is totally homogenized. Mixing is discontinued and acetone is caused to evaporate off, with the aid of a nitrogen stream. The coated polymer is dried by means of a low vacuum 39.9 KPa (300 mm Hg) and heating at 40°C during aporoximately 30 minutes.
   In that way, a polymer is obtained the pellets of which are coated with a thin film of maleic anhydride also containing the peroxide. The weight ratios of the above said three components to each other are: polymer:maleic anhydride:free radical initiator = 100:0.2:0.005.
   This operation is repeated ten times, and at the end an amount of polymer of approximately 70 kg coated with a thin layer of maleic anhydride and peroxide is obtained. Such an amount of polymer is large enough to feed for at least one hour a twin-screw extruder of the type described in the following (Werner ZSK 53L).
(b) TRIAL OF POLYETHYLENE (HDPE ERACLENE MM 95) GRAFTING WITH MALEIC ANHYDRIDE BY FEEDING ALL OF POLYETHYLENE AS PELLETS, TOGETHER WITH MALEIC ANHYDRIDE AND RADICAL INITIATOR.
   In the presence of an inert gas blanketing atmosphere (nitrogen), used to remove most air, high density polyethylene pellets, which were previously coated with a thin layer of maleic anhydride and peroxide, according to such modalities as disclosed hereinabove, was fed from a charging hopper (hopper A of Figure 1) and with a feed rate of about 66 kg/h, to the initial point of a co-rotating twin-screw extruder (with three-principles screws), type Werner ZSK 53L, L/D=32. The extruder is schematically shown in the accompanying Figure 1. The used screw profile is similar to as displayed in Figure 2, with the only difference that zone II, equipped with conveying type screw elements, is much shorter, and namely is about 6.8 diameter long (36 cm).
   The space operating temperatures were kept comprised within the range of from 140°C to 240°C and were measured at 4 different points in the extruder by means of thermocouples (see Figure 1, points T₁, T₂, T₃ and T₄). In this specific case, said temperatures were: T₁ = 140°C; T₂=240°C; T₃=210°C; T₄=180°C, respectively.
   At about three-fourths of extruder length, into the extruder an hexanic solution containing 8% of antioxidant (ANOX PP18), by weight, is injected in such an amount as to have, at extruder outlet, a polymer containing a total of from 150 to 200 ppm of antioxidant. The solvent (hexane), together with other possible volatiles, is removed from a venting point (point "D" of Figure 1), slightly downstream from the second, i.e., the latter, kneading zone (zone V of Figure 1), inside which, by means of a vacuum pump, a residual pressure of 1,33 KPa (10 mm Hg) is maintained.
   The functionalized polymer, obtained as noodles of 2 mm of diameter at the outlet of the die installed at extruder end (point "H" of Figure 1), was cooled by water dipping, then was dried and pelletized by means of a shearing unit. The physical-chemical characteristics of sucn functionalized polymer are reported in following Table 3, together with those of the functionalized polymers from the following Examples.
(c) PREPARATION OF A MULTILAYER FILM BY USING THE PREVIOUSLY PREPARED POLYETHYLENE FUNCTIONALIZED WITH MALEIC ANHYDRIDE AS THE BINDING AGENT.
   The polymer functionalized with maleic anhydride, previously prepared [reference is made to the preceding points (a) and (b)], was used as the binding agent in the preparation of a multilayer film consisting of two films of mutually incompatible polymers, i.e., respectively polyethylene and nylon, the characteristics of which are reported in following Table 2.
   The co-extrusion was carried out by means of a three-layer flat head co-extrusion (casting) facility composed by:
   (i) a GHIOLDI extruder (used for nylon), with a screw of 30 mm of diameter, L/D = 25, equipped with a Mylefer type of screw,
   (ii) a GOTTFERT extruder (used for polyethylene), with a double-thread screw of MYLEFER type of 30 mm of diameter, L/D = 26, with a compression ratio C.R. = 2.6,
   (iii) a REFENHAUSER extruder (used for the grafted polymer), with a single-thread screw of 30 mm of diameter, L/D = 28 and a compression ratio C.R. = 4.

   The three layer head, supplied by SIMPLAST, is 330 mm wide. The co-extrusion temperature (head temperature) was of 250°C.
   After leaving the extruder head, the multilayer film runs on a chill-roll (thermostatted at the temperature of 17°C) and is coiled up by an adjustable GHIOLDI winding unit.

The thicknesses of the three layers were: 70 micrometres for the first layer polyethylene (Riblene FL 30); 10 micrometres for the functionalized polymer from Example 1; 30 micrometres for nylon 6 (type ADS 40 T ex SNIA BPD).

On the resulting films, the peeling strength and the number or defects or fish eyes of the composite film were measured.

The peeling tests were carried out by means of an INSTRON dynamometer, at the peeling rate of 100 mm/minute, with an opening angle of 90°.

The number of defects (fish eyes, non-melted particles), was visually counted on 10 specimens (of 1000 cm² each) per each sample.

The characteristics of the multilayer films obtained are reported in following Table 4.

### EXAMPLE 2

### (Comparison Example)

The experiment of Example 1 was repeated, however using the screw profile schematically displayed in Figure 2, in which the first kneading zone (zone III) is at about half-length of the extruder (about 16 diameters; 84 cm).

In said Figure 2, the conveying type screw elements, present in zones I, II, IV and VI, are characterized by 2 numerals (e.g.: 180/90), wherein the first of them represents the length of the element as mm, and the second numeral represents the pitch, also as expressed as mm; the mixing elements, installed in the zones III and V are characterized by 4 numerals (e.g. : 60/12*5/30°), wherein the first of them is the total length (as mm) of the kneading screw element, the third of them is the number of teeth the thickness of which (as mm) is expressed by the second numeral and finally, the fourth numeral is the inclination of such teeth.

The code "s", which may be found at the end of the set of 2 or 4 numerals, indicates that the element is with reverse thread (i.e., left-handed screw).

The physical-chemical characteristics of the functionalized polymer are reported in following Table 3, and the characteristics of the multilayer film obtained by using the grafted polymer as the intermediate binding layer [by using the same methodologies of Example 1 (c)], are reported in Table 4.

The data of Table 4, relevant to the functionalized polymer from Example 2, if compared to the same data relevant to the polymer from Example 1 demonstrate that increasing the length of the first extruder section equipped with conveying type screw elements (zone II), improves the optical characteristics of the resulting films.

### EXAMPLE 3

### (Comparison Example)

The experiment of Example 2 was repeated by using, in this case, an LLDPE polyethylene type FLEXIRENE CM 30, the physical-chemical characteristics of which are reported in Table 1.

The properties of the functionalized polymer are reported in following Table 3, and the characteristics of the three-layer film, obtained by using said grafted polymer as the binding agent [by using the same methodology as of Example 1 (c)], are reported in following Table 4.

### EXAMPLE 4

### (Comparison Example)

The experiment of Example 2 was repeated by using, in this case, an LLDPE polyethylene type FLEXIRENE CL 10, the physical-chemical characteristics of which are reported in Table 1.

The properties of the functionalized polymer are reported in following Table 3, and the characteristics of the three-layer film, obtained by using said grafted polymer as the binding agent [by using the same methodology as of Example 1 (c)], are reported in following Table 4.

### EXAMPLE 5

### (Comparison Example)

The experiment of Example 2 was repeated by using an EVA (ethylene-vinyl acetate) copolymer type GREENFLEX ML 30, the physical-chemical characteristics of which are reported in Table 1.

The properties of the functionalized polymer are reported in following Table 3, and the characteristics of the three-layer film, obtained by using said grafted polymer as the binding agent [by using the same methodology as of Example 1 (c)], are reported in following Table 4.

The results from the sperimental tests of Examples from 1 to 5, reported above for comparison puposes, are to be compared to those from the corresponding Examples 6-10 carried out according to methodology of the present invention.

### EXAMPLE 6

This Example is to be compared to Example 2.

In the presence of an inert gas blanketing atmosphere (nitrogen), used to remove most air, high density polyethylene pellets (HDPE ERACLENE MM 95, manufactured by Enichem Polimeri without antioxidant), are fed from a charging hopper (hopper A of Figure 1) and with a feed rate of about 60 kg/h, to the initial point of a co-rotating twin-screw extruder (with three-principles screws), type Werner ZSK 53L, L/D=32.

From a second charging hopper (hopper "B" of Figure 1), 6 kg/h (about 10% by weight, based on total polyethylene weight) of the same polyethylene (HDPE Eraclene mm 95), which was previously ground (the resulting powder has such a particle size distribution that 90% of particles have a diameter comprised within the range of from 150 to 500 micrometres), and intimately mixed with such an amount of maleic anhydride as to have an end level of maleic anhydride of 0.2% by weight, based on the total weight of polymer fed (polymer pellets + polymer powder), and with such an amount of dicumyl peroxide (DCP) as to have an end dicumyl peroxide level of 0.005% by weight, based on total weight of fed polymer (polymer pellets + polymer powder), is fed.

In practice, from the second hopper 6 kg/h of polyethylene powder, 13.2 g/h of maleic anhydride and 0.33 g/h of dicumyl peroxide are fed, intimately mixed with one another.

The extruder is schematically displayed in the accompaning Figure 1. The used screw profile is schematically shown in Figure 2; the first kneading zone (zone III of Figure 1) is at approximately half-length of the extruder (16 diameters; 84 cm).

The space operating temperatures were kept comprised within the range of from 120°C to 250°C and were measured at 4 different points in the extruder by means of thermocouples (see Figure 1 , points T₁, T₂, T₃ and T₄). The temperatures are about the same as seen in the case of preceding Example 1 (b); in this specific case, said temperatures were: T₁ = 140°C; T₂ = 240°C; T₃ = 215°C; T₄ = 190°C, respectively.

At about three-fourths of extruder length, into the extruder an hexanic solution containing 8% by weight of antioxidant (ANOX PP18) is injected in such an amount as to have, at extruder outlet, a polymer containing a total amount of 160 ppm of antioxidant. The solvent (hexane), together with other possible volatiles, is removed from a venting point (point "D" of Figure 1), slightly downstream from the second, i.e., the latter, kneading zone (zone V of Figure 1), inside which, by means of vacuum pump, a residual pressure of 1,33 KPa (10 mm Hg) is maintained.

The functionalized polymer, obtained as noodles of 2 mm of diameter at the outlet from the die installed at extruder end (point "H" of Figure 1), was cooled by water ipping, then was dried and pelletized by means of a shearing unit.

The physical-chemical characteristics of said functionalized polymer are reported in following Table 3, and the characteristics of the multilayer film, obtained by using the grafted polymer as the intermediate binding layer [using the same methodology as of Example 1 (c)], are reported in Table 4.

When the data shown in Table 4, relevant to the functionalized polymer from Example 6, are compared to the same data as relevant to the functionalized polymer from Example 2, they demonstrate that, by means of the process according to the present invention, the optical characteristics of the films can be considerably improved (by considerably lowering the number of defects), without anyway endangering the characteristics of compatibility and adhesion to nylon, as it results from the respective peeling strength values.

### EXAMPLE 7

The present Example is to be compared to Example 3.

The experiment of Example 6 was repeated by using, in this case, an LLDPE polyethylene type FLEXIRENE CM 30, the physical-chemical characteristics of which are reported in Table 1.

The properties of the functionalized polymer are reported in following Table 3, and the characteristics of the three-layer film, obtained by using said grafted polymer as the binding agent [by using the same methodology as of Example 1 (c)], are reported in following Table 4.

### EXAMPLE 8

The present Example is to be compared to Example 4. The experiment of Example 6 was repeated by using, in this case, an LLDPE polyethylene type FLEXIRENE CL 10, the physical-chemical characteristics of which are reported in Table 1.

The properties of the functionalized polymer are reported in following Table 3, and the characteristics of the three-layer film, obtained by using said grafted polymer as the binding agent [by using the same methodology as of Example 1 (c)], are reported in following Table 4.

### EXAMPLE 9

The present Example is to be compared to Example 5. The experiment of Example 6 was repeated by using an EVA (ethylene-vinyl acetate) copolymer type GREENFLEX ML 30, the physical-chemical characteristics of which are reported in Table 1.

The properties of the functionalized polymer are reported in following Table 3, and the characteristics of the three-layer film, obtained by using said grafted polymer as the binding agent [by using the same methodology as of Example 1 (c)], are reported in following Table 4.

**Table 1**

| Physical-chemical characteristics of the polymers used in the functionalization tests | | | |
|---|---|---|---|
| Polymer type | Trade name | MFI (*) | Density (g/cm³) |
| HDPE | ERACLENE MM 85 | 4.0 | 0.953 |
| LLDPE | FLEXIRENE CM 30 | 4.0 | 0.923 |
| LLDPE | FLEXIRENE CL 10 | 2.5 | 0.918 |
| EVA (**) | GREENFLEX ML 30 | 2.5 | -- |

| | | | |
|---|---|---|---|
| (*) As measured according to ASTM D 1238 | | | |
| (**) Ethylene-vinyl acetate copolymer containing 9% by weight of vinyl acetate | | | |

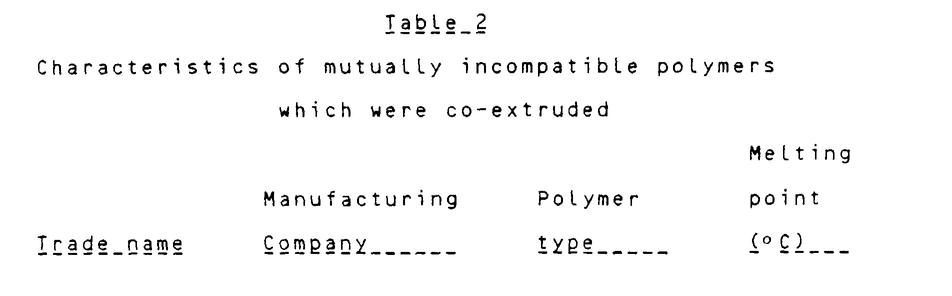

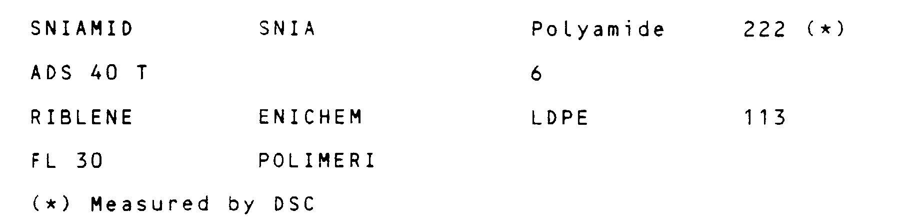

**Table 3**

| Characteristics of functionalized polymers | | | |
|---|---|---|---|
| Example No. | Functionalized polymer type | MFI (*) | Contained AM (% by weight) (**) |
| 1 | HDPEgAM | 3.1 | 0.14 |
| 2 | HDPEgAM | 3.3 | 0.13 |
| 3 | LLDPEgAM | 3.1 | 0.09 |
| 4 | LLDPEgAM | 1.4 | 0.11 |
| 5 | EVAgAM | 2.0 | 0.08(***) |
| 6 | HDPEgAM | 3.4 | 0.16 |
| 7 | LLDPEgAM | 3.5 | 0.14 |
| 8 | LLDPEgAM | 1.8 | 0.15 |
| 9 | EVAgAM | 2.1 | 0.12(***) |

| | | | |
|---|---|---|---|
| (*) ASTM D 1505 | | | |
| (**) By I.R. | | | |
| (***) As determined by acid-base titration | | | |

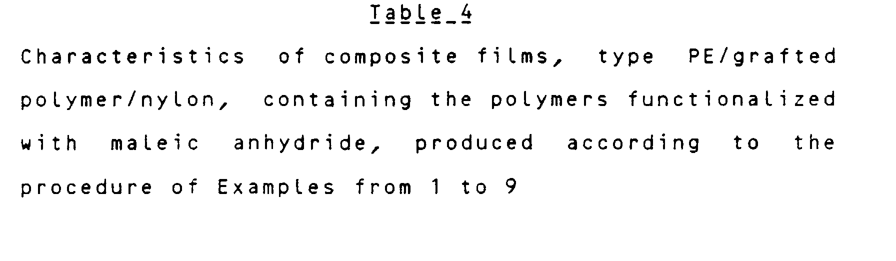

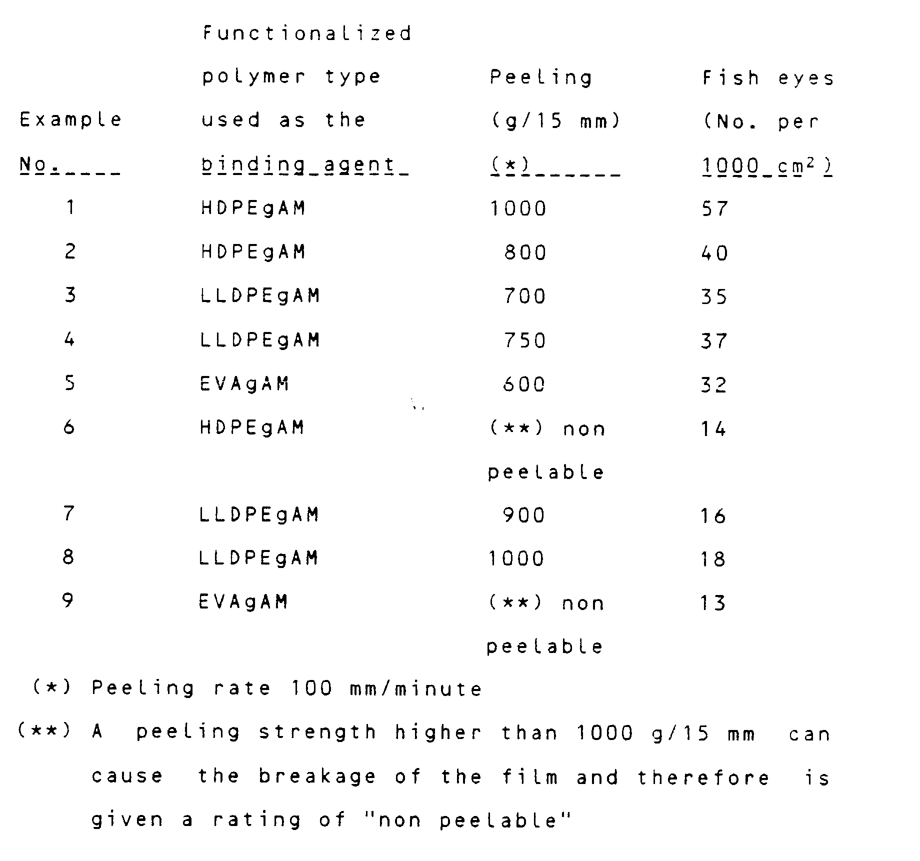

## Claims

1. Continuous process for functionalizing ethylene (co)polymers by grafting, in an extruder, said ethylene (co)polymers with maleic anhydride and in the presence of a radical initiator of peroxy type, which essentially comprises the following steps:
(a) feeding under a blanket nitrogen atmosphere and continuously, the polymer to be grafted, maleic anhydride and the radical initiator, to the initial section of a twin-screw extruder, in whicn initial section of said extruder temperature is kept at a value which is 5°C-20°C higher than the polymer melting temperature, the first extruder section, equipped with conveying type screw elements, having a length comprised within the range of from 35% to 60% of total extruder length,
(b) continuously feeding, to a point which is at about three fourths of total extruder length, an hexanic solution of from 5 to 10% by weight of an antioxidant and in such an amount as to obtain an end polymer containing 150-200 parts per million parts (ppm) of antioxidant,
(c) removing hexane somewhere upstream from the extruder end,
(d) causing the grafted polymer in the molten state to flow through a die installed at the extruder end;
with such a process being characterized in that:
i) the polymer to be grafted is free from stabilizers and it is free from antioxidant,
ii) an aliquot of the polymer to be grafted, not higher than 95% by weight of total polymer, is fed as pellets, with the residual portion comprised in the range of from 5 to 50% b.W. being fed as a powder containing, intimately mixed with it, the whole amount of maleic anhydride and the radical initiator,
iii) the whole reactive mass flows through the first section of the extruder, equipped with conveying type screw elements, during a long enough time in order to enable the aliquot of polymer powder to be at least partially melted and it to be simultaneously homogenized with the polymer pellets.

2. Continuous process according to claim 1, characterized in that the first extruder section, has a length comprised within the range of from 40% to 50% of total length.

3. Continuous process according to claim 1, characterized in that the polymers to be grafted are ethylene (co)polymers belonging to the group comprising: high-density polyethylene (HDPE), linear low density polyethylene (LLDPE), ethylene copolymers with alpha-olefins and ethylene copolymers with vinyl acetate (EVA).

4. Continuous process according to claim 1, characterized in that the polymer powder is constituted by particles with an average size comprised within the range of from 150 to 500 micrometres.

5. Continuous process according to claim 1, characterized in that the polymer aliquot fed in pellet form and the polymer aliquot fed in powder form are fed to the extruder in a mutual ratio comprised within the range of from 95:5 to 85:15 parts by weight of polymer in pellet form : parts by weight of polymer in powder form.

6. Continuous process according to claim 1, characterized in that the amount of maleic anhydride fed constitutes from 0.07 to 0.30% by weight of total fed polymer.

7. Continuous process according to claim 1, characterized in that the radical initiator is an organic peroxide and preferably is dicumyl peroxide.

8. Continuous process according to claim 7, characterized in that the amount of dicumyl peroxide fed constitutes from 0.003 to 0.008% by weight of total polymer fed.

## Patentansprüche

1. Kontinuierliches Verfahren zur Herstellung von Ethylen(co)polymeren mit funktionellen Gruppen durch Pfropfen der Ethylen(co)polymere mit Maleinsäureanhydrid und in Gegenwart eines Radikalinitiators vom Peroxo-Typ in einem Extruder, das im wesentlichen folgende Schritte umfaßt:
(a) kontinuierliches Einspeisen des von einer Stickstoff-Atmosphäre umgebenen zu pfropfenden Polymers, des Maleinsäureanhydrids und des Radikalinitiators in den Anfangsabschnitt eines Doppelschneckenextruders, wobei in diesem Abschnitt des Extzruders die Temperatur auf einem Wert im Bereich von 5 - 20 °C über der Polymerschmelztemperatur gehalten wird, wobei der erste Extruderabschnitt mit Förderschneckenelementen ausgestattet ist und eine Länge im Bereich von 35 - 60 % der Gesamtextruderlänge aufweist,
(b) kontinuierliches Einspeisen einer Hexanlösung von 5 bis 10 Masse% eines Antioxidationsmittels und in einer solchen Menge, daß ein engültiges Polymer, das 150 - 200 Teile per Million Teile (ppm) an Antioxidationsmittel enthält, gewonnen wird, an einem Punkt, der sich auf drei Viertel der Gesamtextruderlänge befindet,
(c) Ableiten von Hexan an einer bestimmten Stelle vor dem Extruderende,
(d) Hindurchführen des gepfropften Polymers in geschmolzenem Zustand durch eine am Ende des Extruders befindliche Düse;
wobei ein solches Verfahren dadurch gekennzeichnet ist, daß:
i) das zu pfropfenden Polymer frei von Stabilisations- und Antioxidationsmitteln ist,
ii) ein aliquoter Teil des zu pfropfenden Polymers, der maximal 95 Masse% der Gesamtpolymermasse ausmacht, als Pellets eingespeist wird, wobei ein Restanteil im Bereich von 5 - 50 Masse% in Form von Pulver eingespeist wird, das den gesamten Anteil Maleinsäureanhydrid und Radikalinitiator enthält und gründlich mit dem Polymer gemischt wird,
iii) die gesamte an der Reaktion beteiligte Masse durch den ersten Extruderabschnitt, der mit Förderschneckenelementen ausgestattet ist, über einen Zeitraum mit erfoderlicher Länge strömt, so daß der aliquote Teil des Polymerpulvers zumindest teilweise geschmolzen und gleichzeitig mit den Polymerpellets homogenisiert wird.

2. Kontinuierliches Verfahren nach Anspruch 1, dadurch gekennzeichnet, daß der erste Extruderabschnitt eine Länge im Bereich von 40 - 50 % der Gesamtlänge aufweist.

3. Kontinuierliches Verfahren nach Anspruch 1, dadurch gekennzeichnet, daß es sich bei den zu pfropfenden Polymeren um Ethylen(co)polymere handelt, die zu der Gruppe mit folgenden Arten zählen: Polyethylen hoher Dichte (HDPE), lineares Polyethylen niederer Dichte (LLDPE), Ethylencopolymere mit α-Olefinen und Ethylencopolymere mit Vinylacetat (EVA).

4. Kontinuierliches Verfahren nach Anspruch 1, dadurch gekennzeichnet, daß das Polymerpulver aus Teilchen mit einer Durchschnittsgröße im Bereich von 150 - 500 µm besteht.

5. Kontinuierliches Verfahren nach Anspruch 1, dadurch gekennzeichnet, daß der aliquote Teil des Polymers, der in Pelletform eingespeist wird, und der aliquote Teil des Polymers, der in Pulverform zugesetzt wird, dem Extruder in einem Verhältnis von 95:5 bis 85:15 Masseteile Polymer in Pelletform zu Masseteile Polymer in Pulverform zugeführt wird.

6. Kontinuierliches Verfahren nach Anspruch 1, dadurch gekennzeichnet, daß die zugesetzte Menge Maleinsäureanhydrid 0,07 - 0,30 Masse der gesamten zugegebenen Polymermenge entspricht.

7. Kontinuierliches Verfahren nach Anspruch 1, dadurch gekennzeichnet, daß es sich bei dem Radikalinitiator um ein organisches Peroxid und vorzugsweise um Dicumylperoxid handelt.

8. Kontinuierliches Verfahren nach Anspruch 7, dadurch gekennzeichnet, daß die zugesetzte Menge Dicumylperoxid 0,003 - 0,0084 Masse% der eingespeisten Gesamtmenge an Polymer ausmacht.

## Revendications

1. Procédé continu pour fonctionnaliser des (co)polymères de l'éthylène par greffage, dans une extrudeuse, desdits (co)polymères de l'éthylène avec de l'anhydride maléique, et en présence d'un amorceur radicalaire du type peroxy, qui comprend essentiellement les étapes consistant :
(a) à introduire sous une atmosphère constituée d'une couverture d'azote, et en continu, le polymère à greffer, l'anhydride maléique et l'amorceur radicalaire dans la section initiale d'une extrudeuse double vis, la température de la section initiale de ladite extrudeuse étant maintenue à une valeur de 5 à 20°C supérieure à la température de fusion du polymère, la première section de l'extrudeuse, équipée d'éléments de vis transporteuse, ayant une longueur comprise entre 35 % et 60 % de la longueur totale de l'extrudeuse,
(b) à introduire en continu, en un point situé approximativement aux trois quarts de la longueur totale de l'extrudeuse, une solution dans l'hexane de 5 à 10 % en poids d'un antioxydant, et en une quantité suffisante pour obtenir un polymère final contenant de 150 à 200 parties par million (ppm) d'antioxydant,
(c) à éliminer l'hexane en un certain point situé en amont de l'extrémité de l'extrudeuse,
(d) à amener le polymère greffé, à l'état fondu, à s'écouler à travers une filière installée à l'extrémité de l'extrudeuse ;
un tel procédé étant caractérisé en ce que :
i) le polymère à greffer est exempt de stabilisants et est exempt d'antioxydant,
ii) une partie du polymère à greffer, non supérieure à 95 % en poids par rapport au polymère total, est introduite sous forme de pastilles, la partie restante, qui correspond à une quantité de 5 à 50 % en poids, étant introduite sous forme d'une poudre contenant, en mélange intime avec elle, la quantité totale d'anhydride maléique et d'amorceur radicalaire,
iii) la totalité de la masse réactionnelle s'écoule à travers la première section de l'extrudeuse, équipée d'éléments de vis transporteuse, pendant un laps de temps suffisant pour permettre à la partie de poudre de polymère de subir une fusion au moins partielle, ainsi qu'une homogénéisation simultanée avec les pastilles de polymère.

2. Procédé continu selon la revendication 1, caractérisé en ce que la première section de l'extrudeuse a une longueur comprise entre 40 et 50 % de la longueur totale.

3. Procédé continu selon la revendication 1, caractérisé en ce que les polymères à greffer sont les (co)polymères de l'éthylène appartenant au groupe comprenant le polyéthylène haute densité (PEHD), le polyéthylène basse densité linéaire (PEBDL), les copolymères de l'éthylène avec des alphaoléfines et les copolymères de l'éthylène avec de l'acétate de vinyle (EVA).

4. Procédé continu selon la revendication 1, caractérisé en ce que la poudre de polymère est constituée de particules ayant une grosseur moyenne comprise entre 150 et 500 micromètres.

5. Procédé continu selon la revendication 1, caractérisé en ce que la partie de polymère introduite sous forme de pastilles, et la partie de polymère introduite sous forme de poudre, sont introduites dans l'extrudeuse selon un rapport mutuel compris entre 95:5 et 85:15, en parties en poids de polymère sous forme de pastilles : parties en poids de polymère sous forme de poudre.

6. Procédé continu selon la revendication 1, caractérisé en ce que la quantité introduite d'anhydride maléique représente de 0,07 à 0,30 % en poids de la totalité du polymère introduit.

7. Procédé continu selon la revendication 1, caractérisé en ce que l'amorceur radicalaire est un peroxyde organique, et de préférence le peroxyde de dicumyle.

8. Procédé continu selon la revendication 7, caractérisé en ce que la quantité introduite de peroxyde de dicumyle représente de 0,003 à 0,008 % en poids de la totalité du polymère introduit.
